# EUROPEAN PATENT APPLICATION

(11) **EP 4 470 821 A1**
(43) Date of publication of application: **04.12.2024**
(21) Application number: 24178161.6
(22) Date of filing: 27.05.2024
(51) Int. Cl.: B60L 53/12, B60L 53/30, B60L 58/13, H02J 50/10

(54) **METHOD FOR CONTROLLING A FUNCTIONING OF A COMPONENT OF A VEHICLE**

(30) Priority: 29.05.2023 IT 202300010845
(71) Applicant: IVECO S.P.A., 10156 Torino (IT)
(72) Inventor: RUSSO, Gerardo, 10156 TORINO (IT)
(74) Representative: Studio Torta S.p.A.

(57) **Abstract**

A method implemented by a control unit (15) for controlling a functioning of a component (11, 12) of a vehicle (10). The method comprises the steps of: receiving (S1) route data indicative of a planned route of the vehicle; receiving (S2) vehicle data indicative of a status of the vehicle; determining (S3, S4) a use profile of the component of the vehicle based on the route data and the vehicle data; and controlling (S5) the functioning of the component of the vehicle based on the determined use profile.

## Description

### CROSS-REFERENCE TO RELATED APPLICATIONS

This patent application claims priority from Italian patent application no. 102023000010845 filed on May 29, 2023, the entire disclosure of which is incorporated herein by reference.

### TECHNICAL SECTOR

This invention relates to a method for controlling a functioning of a vehicle component.

In particular, the preferred, but non-limiting, application of the invention is controlling the functioning of a propulsion system of an electric or hybrid vehicle comprising a battery.

### PRIOR ART

As known, the components of a vehicle, for example the components of a propulsion system of the vehicle (DC/DC converters, battery, etc.) or of an air conditioning system in the vehicle passenger compartment, impact the final cost of the vehicle.

In addition, the components are subject to a drop in performance over time.

Frequently replacing the vehicle components is disadvantageous both in economic and environmental terms.

As a result, there is a need to provide a control method for the functining (or use profile) of a vehicle component that makes it possible to extend the service life of the component.

With particular reference to electric or hybrid vehicles, they have a propulsion system comprising a battery.

The propulsion system, especially the corresponding battery, is a vehicle component that is subject to ageing that causes significant decline in its performance over time.

For example, the battery is subject to a reduction in the respective maximum capacity, i.e. the maximum power that can be stored in the battery, with a consequent negative impact on the autonomy of the vehicle.

It is also known that the batteries have a significant impact on the cost of manufacturing the vehicle.

Frequently changing the battery also has a significant negative impact on the environment.

Despite this, the Applicant has observed that the known methods for controlling the use profile of the vehicle components, in particular a battery of a hybrid or electric vehicle, do not consider the actual use of the vehicle and do not ensure a long enough component service life.

There is, thus, a need to provide a method for controlling the operation of a vehicle component, in particular a battery of a hybrid or electric vehicle, in order to extend its service life.

The purpose of this invention is to meet the requirements mentioned above.

### SUMMARY OF THE INVENTION

The above-mentioned purpose is achieved with a method for controlling a functioning (or use profile) of a vehicle component, a system that implements the method, and a computer program, as claimed in the attached claims.

### BRIEF DESCRIPTION OF THE DRAWINGS

In order to better understand this invention, preferred embodiments thereof will now be described by way of non-limiting example and with reference to the accompanying drawings, in which:
- Figure 1 shows one embodiment of a system that implements the method according to this invention;
- Figure 2 shows a flow diagram of the method according to this invention;
- Figure 3 shows an example of a graph of the trend of the state of charge (SOC) of a battery of a vehicle in Figure 1, in use, according to this invention;
- Figure 4 shows another embodiment of a system that implements the method according to this invention; and
- Figure 5 shows an example of a graph of the trend of the state of charge (SOC) of a battery of a vehicle in Figure 4, in use, according to this invention.

### DETAILED DESCRIPTION OF THE INVENTION

The method proposed according to this invention involves controlling a functioning, indicated below also as operation mode or use profile, of a vehicle component, based on a planned route that the vehicle is travelling along or will travel along and based on the status of the vehicle.

The vehicle is preferably an electric or hybrid propulsion vehicle.

The vehicle component may be a vehicle propulsion system, in particular it may be a DC/DC converter, a battery, etc. of the vehicle propulsion system, or it may be an air conditioning system for the vehicle passenger compartment.

For example, in the case of an electric or hybrid propulsion vehicle, the air conditioning system may comprise a heater such as a resistor or a heat pump supplied by the propulsion system of the vehicle.

According to one preferred embodiment of the invention, the component is a propulsion system of an electric or hybrid vehicle, still more preferably a battery of the propulsion system.

The use profile of the component may also be chosen as a function of a mission goal to be respected during the planned route.

The mission goal may be indicated by a vehicle user. For example, the mission goal may comprise respecting a desired travel time; a maximum or minimum number of intermediate stops; one or more maximum and/or minimum speeds of the vehicle; or a desired travel cost, for example as a function of the cost of power used for recharging the vehicle battery.

Below, the description will refer to controlling the use profile of the propulsion system of an electric or hybrid vehicle, in particular of the corresponding battery.

By use profile of the propulsion system it is meant, hereinafter, unless otherwise specified, a specific mode of use of the propulsion system during vehicle traction (for example a maximum value of instantaneous and/or average power deliverable by the battery for the propulsion of the vehicle during the planned route) and/or a specific mode of use of the propulsion system during recharging of the battery (for example an instantaneous and/or average power value to be absorbed from a recharge source, a specific trend over time of the power absorbed, a maximum value of the state of charge of the battery obtained at the end of the recharge operation, etc.).

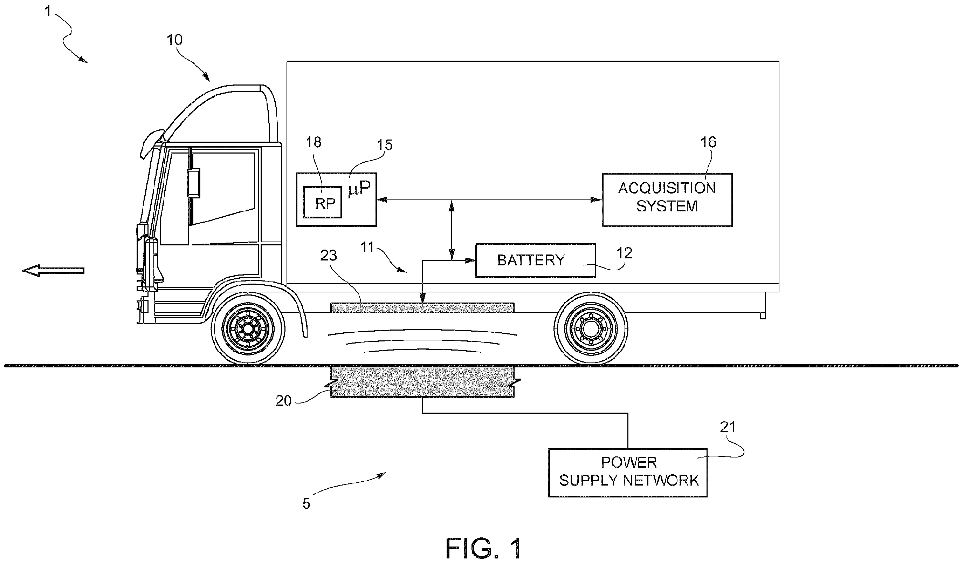

Figure 1 illustrates a system 1 comprising a wireless power transfer infrastructure, hereinafter a WPT, 5 and a vehicle 10 configured to be coupled with the WPT infrastructure 5.

The vehicle 10 may be any mechanical means that is driven or can be driven by a human being (or even remotely driven), configured to transport people, animals, or goods, circulating on the road, tracks, or another surface.

The vehicle 10 is an electric vehicle comprising an electric propulsion system 11 in which electric supply is provided by one or more batteries 12.

However, the vehicle 10 may also be a hybrid propulsion vehicle, i.e. equipped with a propulsion system with two or more components, for example an electric motor and a thermal engine, which operate in synergy with other.

The vehicle 10 includes a control unit 15 (for example an electronic control unit of the vehicle 10 or an additional processing unit other than the electronic control unit) and an acquisition system 16.

The control unit 15 is provided with a microprocessor and a memory, which are operationally coupled. The memory may also be external to the control unit 15, coupled to the microprocessor in a known way.

In this embodiment, the control unit 15 also comprises a planning module 18 configured to store the planned route that the vehicle 10 is travelling or will travel.

In any case, the planning module 18 may be a remote unit, external to the vehicle 10, for example operating in the cloud, and configured to be coupled to the control unit 15 via the internet network or another type of known connection.

The acquisition system 16 comprises one or more sensors configured to acquire one or more physical quantities associated with the status of the vehicle and to provide vehicle data indicating the detected physical quantities to the control unit 15.

For example, the vehicle data may indicate the weight of the vehicle 10, travel speed and/or acceleration of the vehicle 10, or current geolocation (position) of the vehicle 10, etc.

In addition, the vehicle data may indicate the status of the electric propulsion system 11, for example the state of charge (SOC) of the battery 12, temperature of the battery 12, etc.

In the embodiment in Figure 1, the WPT infrastructure 5 is a dynamic infrastructure, also known as dWPT, configured to be coupled with the propulsion system 11 of the vehicle 10 during driving of the vehicle 10.

In detail, the dWPT infrastructure 5 comprises transfer means 20, for example one or more coils, arranged in proximity to the road surface, for example below the road surface, electrically coupled to a power supply network 21.

The transfer means 20 may be uniformly distributed along the planned route of the vehicle or may be distributed so as to form recharging islands spaced apart from each other, depending on the specific dWPT infrastructure.

The propulsion system 11 of the vehicle 10 comprises reception means 23, for example one or more coils, configured to be electrically coupled to the transfer means 20, for example via electromagnetic induction.

The reception means 23 are coupled to the battery 12 of the vehicle 10 and provide recharging power to the battery 12.

For example, the reception means 23 may also comprise specific voltage and/or current amplification, modulation, or rescaling circuits, etc., in order to modulate the recharging power absorbed by the battery 12.

The control unit 15 is operationally coupled to the propulsion system 11 to control the functioning of the battery 12 both during the traction of the vehicle 10, i.e. to control its delivered power, for example to control the maximum peaks of acceleration of the vehicle 10, and during recharging of the battery 12, to control the power absorbed by the battery 12.

Specifically, the control unit 15 controls the coupling between the reception means 23 and the transfer means 20, so as to control the recharging profile of the battery 12, i.e. the trend over time of the power absorbed by the battery 12.

For example, the control unit 15 may control activation or deactivation of the coupling between the reception means 23 and the transfer means 20, may adjust the coupling time thereof, the frequency of coupling events, the power absorbed during each coupling event, etc.

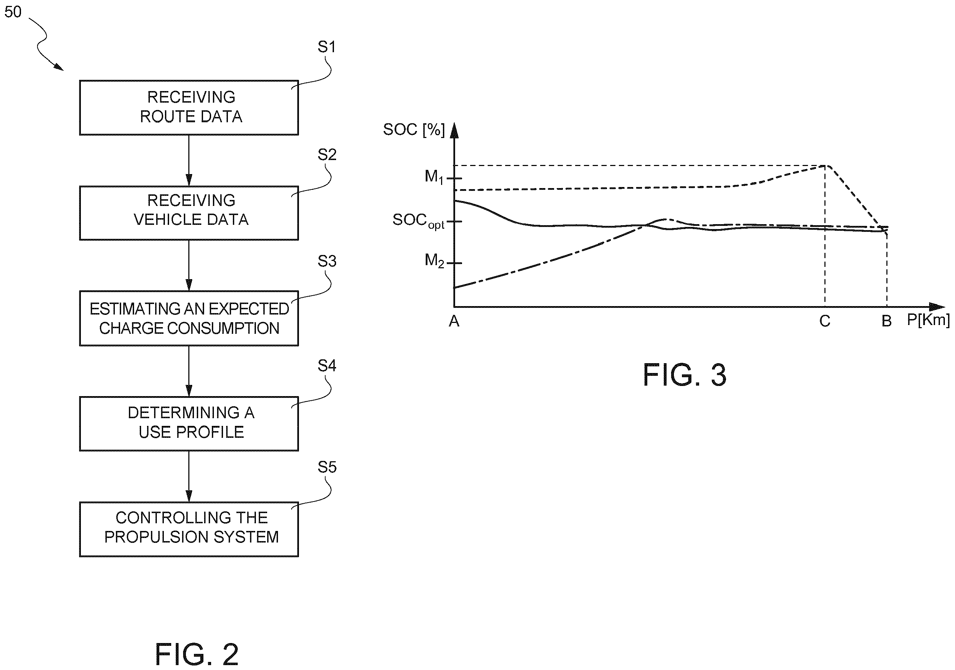

Hereinafter, with reference to Figure 2, a method 50 for controlling the use profile of the propulsion system 11 is described.

The method 50 may be implemented locally by the control unit 15 or in a distributed manner by the control unit 15 and by a remote unit, not shown here, and operationally coupled to it.

For example, the remote unit may be a remote server in the cloud coupled to the control unit 15 via a known connection and configured to perform operations having a high consumption of computational resources.

In a step S1, the control unit 15 receives route data indicative of the expected or planned itinerary (route) that the vehicle 10 will travel until a final destination.

For example, the route data may be stored in the planning module 18.

For example, the route data may be provided by a user and temporarily stored in the planning module 18.

The route data comprise, for example, information relating to the current road conditions and to those expected during the planned route in instants of time subsequent to the current processing, such as, for example, expected road slopes, the presence of traffic, or distribution and position of stations for recharging of the battery 12.

In addition, the route data may also comprise the cost of power at recharging stations along the planned route.

In detail, with reference to the embodiment of Figure 1, the route data also include the position and distribution of the transfer means 20 of the dWPT infrastructure 5 along the planned route.

In practice, the transfer means 20 of the dWPT infrastructure 5 form recharging stations of the battery 12 along the planned route.

In other words, the route data comprise information about the itinerary of the vehicle 10 that indicate the expected charge consumption of the battery 12 and/or the possibility of recharging the battery 12 along the planned route.

In a step S2, the control unit 15 receives the vehicle data from the acquisition system 16. The vehicle data indicate the current status of the vehicle 10 and comprise, for example, the vehicle weight 10, state of charge of the battery 12, temperature of the battery 12, or current geolocation of the vehicle 10, etc.

Subsequently, the processing unit 15 determines a use profile of the propulsion system 11 based on the vehicle data and route data.

In detail, in this embodiment, the control unit 15 estimates, step S3, an expected charge consumption of the battery 12 based on the route data and vehicle data.

The estimate may be calculated through specific algorithms, for example previously trained artificial intelligence algorithms or via specific tables previously stored in the control unit 15, in a known way.

Subsequently, step S4, the control unit 15 determines the use profile of the propulsion system 11 based on the expected charge consumption that was estimated at step S3.

The use profile is determined so that the state of charge of the battery 12 is maintained around an optimal charge value Sₒₚₜ.

In this embodiment, the determined use profile corresponds to the power to be absorbed from the dWPT infrastructure 5, by the propulsion system 11, for recharging the battery 12.

In detail, the use profile may indicate the instantaneous power to be absorbed and/or the recharging profile of the battery 12, i.e. the time behaviour of the power to be absorbed.

According to one embodiment, the determined use profile may also indicate the regulation of the power delivered by the battery 12 for the propulsion of the vehicle 10.

For example, the optimal charge value Sₒₚₜ may be comprised between 40% and 60%, in particular approximately equal to 50%, of the maximum charge capacity of the battery 12.

The determined use profile may be such that the neighbourhood of the optimal state of charge is a range smaller, in particular strictly smaller, than the range comprised between the maximum state of charge (for example 100%) and the minimum state of charge (for example 0%) of the battery 12.

For example, the neighbourhood of the optimal charge value Sₒₚₜ may correspond to a range of the state of charge of the battery 12 from 10% to 90%, in particular so that the state of charge is maintained within a deviation of 20%, in particular of 10%, with respect to the optimal charge value Sₒₚₜ.

The control unit 15 controls, step S5, the propulsion system 11 based on the use profile determined in step S4.

For example, the control unit 15 may provide a control signal to the propulsion system 11 that is configured to control the propulsion system 11, for example the reception means 23 and/or the battery 12.

In other words, the control unit 15 configures the propulsion system 11 and adjusts its functioning so as to operate based on the determined use profile.

In practice, the control unit 15 may for example control number, duration, and/or frequency of the coupling events between the reception means 23 of the vehicle 10 and the transfer means 20 of the dWPT infrastructure 5.

The control unit 15 may control, for example, the instantaneous power absorbed by the battery 12 in each coupling event between the reception means 23 of the vehicle 10 and the transfer means 20 of the dWPT infrastructure 5.

In addition, or alternatively, if the use profile also comprises information relating to the functioning of the propulsion system 11 during traction, the control unit 15 can also regulate the power that can be delivered by the battery 12 for the propulsion of the vehicle 10.

Figure 3 shows, merely by way of example, the trend of the state of charge of the battery 12 as a result of the implementation of the method 50 in Figure 2, in various use scenarios.

In a first example scenario, identified with a solid line in Figure 3, the dWPT infrastructure 5 is present for the whole expected route of the vehicle 10, i.e. between a starting point A and an arrival point B.

This information may be stored in the route data received at step S1.

In the example considered, the state of charge of the battery at the starting point A is comprised within the desired neighbourhood (between the upper limit M₁ and the lower one M₂) of the optimal charge value Sₒₚₜ.

The use profile determined in step S4 is such as to basically keep the state of charge of the battery 12 constant during the whole planned route of the vehicle 10.

In practice, the recharging profile of the battery 12 may be chosen in such a way as to compensate for the charge consumed for the use, in particular for the propulsion, of the vehicle 10 during the planned route A-B.

In a second example scenario, the dWPT infrastructure 5 is only present in a portion of the route planned by the vehicle 10, from the starting point A to an intermediate point C.

In practice, between the intermediate point C and the arrival point B, there are no further recharging stations.

This information about the distribution of recharging means may be stored in the route data received at step S1.

The trend of the state of charge of the battery 12 in the second scenario is indicated by a dashed line in Figure 3.

In this case, the recharging profile determined at step S4 is adjusted in such a way that the battery 12 has, when the vehicle 10 is at the intermediate point C, a state of charge sufficient to enable the vehicle 10 to reach the destination point B.

In this embodiment, the state of charge of the battery 12 at the point C may be greater than the upper limit M₁.

However, the use profile of the battery 12 is chosen so that the state of charge of the battery 12 is comprised within the optimal charge range for as great a section as possible of the planned route A-B, while respecting at the same time the mission goal of the vehicle 10 during the planned route.

In a third example scenario, the state of charge of the battery 12 at the starting point A is outside the optimal charge range (less than the lower limit M₂) and the dWPT infrastructure 5 is present along the whole planned route A-B.

The trend of the state of charge of the battery 12 in the third scenario is indicated by a dash-point line in Figure 3.

In this scenario, the recharging profile during the vehicle route is chosen so that the recharging power absorbed by the battery 12 is greater than the charge consumption of the battery 12.

In other words, the control unit 15 commands the propulsion system 11 so that the balance between power absorbed and power delivered is greater than zero (positive slope in the graph in Figure 3).

In practice, the control unit 15 controls the propulsion system 11 (power absorbed from the dWPT infrastructure 5 and/or power delivered by the battery 12) so that the state of charge of the battery 12 increases until the optimal charge range is reached.

In response to reaching the optimal charging range, the recharging profile is amended so as to basically keep the state of charge constant until the arrival point B, similarly to what was discussed with reference to the first scenario in Figure 3.

This method makes it possible to achieve numerous advantages.

Determining the use profile of the component of the vehicle 10 based on the status of the vehicle 10 and the planned route makes it possible to set a use profile of the component that takes into account the actual use of the vehicle 10.

In this way, it is possible to respect the desired mission goals during the planned route.

For example, the use profile may enable optimising the cost of power associated with travelling the planned route by the vehicle 10.

In particular, the use profile may be chosen so as to lengthen the service life of the component.

With reference to the embodiment discussed above, the Applicant has actually verified that the maintenance of the state of charge of the battery 12 close to the optimal charge value, in particular in the neighbourhood of approximately 50%, for the whole planned route of the vehicle 10 or, in line with the mission goals and the presence of recharging facilities along the route, for as great a section of the planned route of the vehicle 10 as possible, makes it possible, surprisingly, to extend the service life of the battery 12.

In addition, the possibility of maintaining the state of charge basically constant, i.e. obtaining a low depth of charge (DoD) of the battery 12 during the planned route contributes to further increasing the service life of the battery 12.

The use of the dWPT infrastructure 5 makes it possible to obtain the desired recharging profile using a low recharging power for an extended time, in contrast to supplying high peaks of recharging power for reduced intervals of time.

This provides the additional advantage of avoiding overloading the dWPT infrastructure 5 and, thus, of being able to use the dWPT infrastructure 5 to simultaneously recharge numerous vehicles.

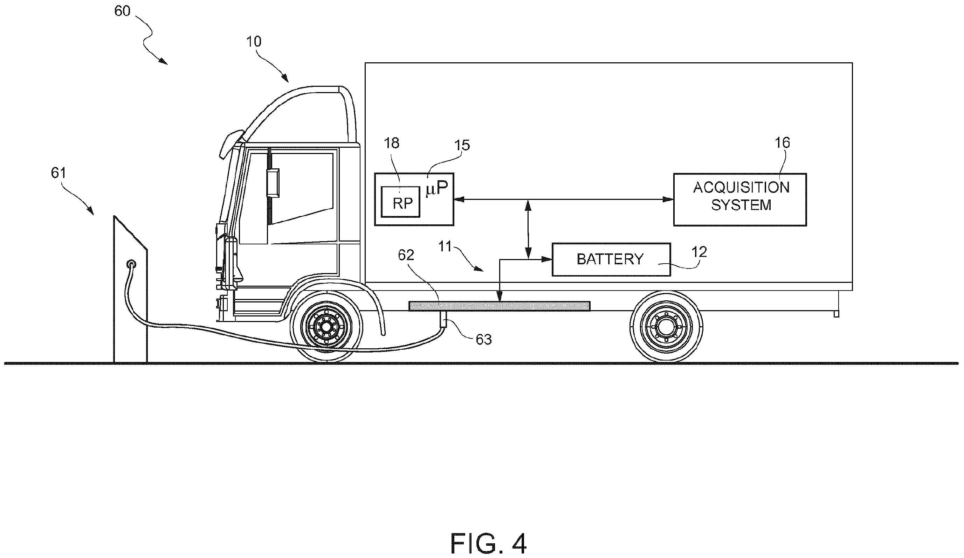

Figure 4 shows a system 60 in which the vehicle 10 is recharged in a recharging station 61 when it is not running, before undertaking the planned route or in a recharging station at an intermediate position between the starting and arrival point.

For example, the starting point may correspond to the position of the recharging station 61 where the recharging operation occurs, and the arrival point may be a subsequent recharging station along the planned route or the final destination of the vehicle 10.

In the embodiment in Figure 4, the recharging station 61 is formed by a recharging column.

The reception means of the propulsion system 11 comprise specific recharging connectors 62 that are configured to be physically coupled with the recharging station 61, for example specific cables 63, for recharging the battery 12.

For example, the recharging of the battery 12 may occur in a carpark or in other stopping or break stations configured for recharging the battery 12.

However, the recharging station 61 may be of another kind, for example it may be a recharging station configured to be coupled with the propulsion system 11 of the vehicle 10 wirelessly, for example using WPT infrastructure arranged near a traffic light or other vehicle stopping points, along the planned route.

In this embodiment, the route data may also include a recharging time t_{ch} that is available to recharge the battery 12.

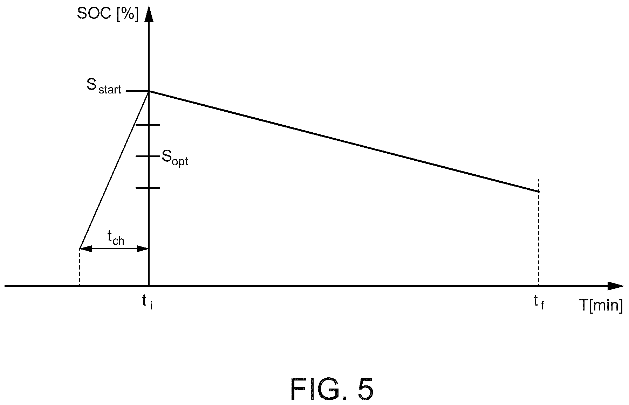

The control unit 15 may determine the recharging profile of the battery 12 so that the state of charge (SOC) of the battery 12 at the end of the recharging event (for example at the time ti in which the vehicle 10 starts the planned route) has a starting value Sₛₜₐᵣₜ that is a function of the expected estimated charge consumption for the planned route of the vehicle 10 (Figure 5).

In Figure 5, the recharging profile during the recharging interval t_{ch} and the discharge profile of the battery 12 during the vehicle 10 route (between the points in time ti and t_{f}) have a trend, purely by way of example, that is linear; however, the recharging and/or discharging profile may have another trend.

In detail, the starting value Sₛₜₐᵣₜ is determined so that the state of charge of the battery 12, during the planned route, is maintained around the optimal charge value Sₒₚₜ for as great a section as possible of the planned route, similarly to what was described with reference to the examples in Figure 3.

The starting value Sₛₜₐᵣₜ may, thus, be lower than the maximum state of charge (for example 100%) of the battery 12.

This is in contrast with the known recharging methods for electric vehicle batteries, in which in each recharging event the goal of each recharging event is to reach the maximum state of charge, irrespective of the planned route of the vehicle 10.

Similarly to what was discussed with reference to Figures 1-3, the Applicant verified that the possibility of modulating the recharging profile of the battery 12 during the interval t_{ch} based on the planned route makes it possible to extend the service life of the battery 12.

Finally, it is clear that changes may be made to the system and method, and variations produced thereto, according to this invention that, in any case, do not depart from the scope of protection defined by the claims.

For example, the embodiments shown and described may be combined with each other to provide additional solutions.

For example, the propulsion system 11 of the vehicle 10 may be configured to be coupled both to the WPT infrastructure 5 in Figure 1 and to the recharging station 61 in Figure 4 for recharging the battery 12.

## Claims

1. A method implemented by a control unit (15) for controlling a functioning of a component (11, 12) of a vehicle (10), comprising:
- receiving (S1) route data indicative of a planned route of the vehicle;
- receiving (S2) vehicle data indicative of a status of the vehicle;
- determining (S3, S4) a use profile of the component of the vehicle based on the route data and the vehicle data; and
- controlling (S5) the functioning of the component of the vehicle based on the determined profile use.

2. The method according to the preceding claim, wherein the vehicle (10) is an electric or a hybrid vehicle having a propulsion system (11) comprising a battery (12), wherein determining a profile use comprises:
estimating (S3) a charge consumption of the battery during the planned route, based on the route data and the vehicle data; and
determining (S4) the use profile of the propulsion system based on the estimated charge consumption.

3. The method according to the preceding claim, wherein the use profile of the propulsion system (11) is determined so that the state of charge of the battery (12) remains, during the planned route, in the neighbourhood (M1-M2) of an optimal charge value (Sopt), for example equal to about 50%.

4. The method according to claim 2 o 3, wherein determining a use profile comprises determining a mode of use of the propulsion system (11) during a recharge operation of the battery (12).

5. The method according to the preceding claim, wherein determining a mode of use of the propulsion system (11) during a recharge operation of the battery comprises determining one or more of: an instantaneous and/or average power value to be absorbed by the battery (12); a time behaviour of the power to be absorbed by the battery; and a final state of charge of the battery in response to a recharge operation.

6. The method according to any one of claims 2-5, wherein determining a use profile comprises determining a mode of use of the propulsion system (11) during the traction of the vehicle.

7. The method according to the preceding claim, wherein determining a mode of use of the propulsion system (11) during the traction of the vehicle comprises determining a maximum value of instantaneous and/or average power that is deliverable, by the battery, during the planned route.

8. The method according to any one of the preceding claims, wherein the route data are indicative of road conditions of the planned route and comprise one or more of: road slopes, traffic, distribution and location of stations for recharging a battery (12) of the vehicle along the planned route.

9. The method according to any one of the preceding claims, wherein the vehicle data are data acquired by an acquisition system (16) of the vehicle and are indicative of one or more parameters chosen from: vehicle weight, vehicle geolocation, state of charge of a vehicle battery (12), battery temperature.

10. The method according to any one of claims 2-9, wherein the vehicle is configured to be coupled to a wireless power transfer, WPT, infrastructure (5) for recharging of the battery while the vehicle is in motion,
wherein determining a use profile of the propulsion system comprises determining a power to be absorbed, by the battery, from the WPT infrastructure, and
wherein controlling the functioning of the propulsion system comprises controlling the coupling between the propulsion system and the wireless power transfer infrastructure so that the battery (12) absorbs the determined power to the absorbed.

11. The method according to any of claims 2-10, wherein the vehicle is configured to be coupled, when the vehicle is stationary, to a recharging station (61) for recharging the battery (12),
wherein determining a use profile of the propulsion system comprises determining a recharging profile of the battery and/or a charge level (Sₛₜₐᵣₜ) of the battery to be reached at the end of a recharge operation, based on the route data and the vehicle data.

12. A system (1; 60) comprising:
a control unit (15); and
a vehicle (10) comprising an acquisition system (16) configured to provide vehicle data indicative of a status of the vehicle,
the control unit being configured to:
- receive (S1) route data indicative of a planned route of the vehicle;
- receive (S2) vehicle data indicative of the status of the vehicle;
- determine (S3, S4) a use profile of a component (11, 12) of the vehicle based on the route data and the vehicle data; and
- controlling (S5) the functioning of the component of the vehicle based on the determined profile use.

13. The system according to the preceding claim, wherein the vehicle is an electric or a hybrid vehicle having a propulsion system (11) comprising a battery (12),
wherein the control unit is configured to estimate (S3) a charge consumption of the battery during the planned route, based on the route data and the vehicle data, and
wherein the control unit is configured to determine the use profile of the propulsion system (11) of the vehicle based on the route data and the vehicle data.

14. The system according to the preceding claim, further comprising a recharging station (5; 61), the propulsion system of the vehicle being configured to couple to the recharging station for recharging the battery (12),
wherein the use profile of the propulsion system (11) comprises a recharging profile of the battery, and
wherein the control unit is configured to control the coupling of the propulsion system with the recharging station based on the determined recharging profile.

15. The system (1) according to the preceding claim, wherein the recharging station is formed by means for wireless power transfer (23, 5).

16. A computer program comprising instructions that, when executed by a control unit (15) couplable to a vehicle (10), cause the control unit to perform the method according to any of claims 1-11.
